# EUROPEAN PATENT APPLICATION

(11) **EP 2 533 152 A1**
(43) Date of publication of application: **12.12.2012**
(21) Application number: 11004643.0
(22) Date of filing: 08.06.2011
(51) Int. Cl.: G06F 9/50

(54) **Command and control system integrated with network management**

(71) Applicant: Astrium Ltd., Portsmouth Hampshire Hampshire PO3 5PU (GB)
(72) Inventor: Taylor, Stuart, Portsmouth, PO3 5PU (GB)
(74) Representative: Avenhaus, Beate

(57) **Abstract**

The invention relates to a command and control system (18) integrated with a network management system (12) being adapted to manage resource assignments to assets (14) controlled by the command and control system within a network.

## Description

### TECHNICAL FIELD

The invention relates to a command and control system integrated with network management according to claim 1.

### BACKGROUND

A Command and Control (C2) system in military refers to a technical system for usage by a commander for planning, directing, and controlling operations of assigned and attached forces. A C2 system uses assets such as unmanned aerial vehicles (UAVs) and ground-based reconnaissance systems, which transmit data via communication connections over the network to a C2 center, in which a commander can control operations of assigned forces and the assets.

C41STAR is a derivative of C2, which particularly refers to the infrastructure used to implement a computer and network technology based C2 system. C4ISTAR is composed of the acronyms C4I and STAR. C4I is an acronym for Command, Control, Computers, Communications, (military) Intelligence and refers to the ability of military commanders to direct forces by using networked computer systems. STAR designates the observations of enemies and operation areas and is an acronym for Surveillance, Target Acquisition, and Reconnaissance.

C2 and particularly C41STAR systems can use different media for communication, particularly for transporting data. For example, satellite communication can be used to transport data from or to an asset such as a vehicle to or from a C2 center.

An exemplary application of data transmission in a C2 system is the transmission of live video streams from cameras of UAVs to a C2 center via satellite communication (satcom). Since satcom resources are limited, particularly the bandwidths available for live video stream transmission, the resources are usually shared by the live video stream sources. For example, 12 UAVs can equally share an available satcom bandwidth of 12 Mbps to a communication satellite so that each UAV has access to an assigned bandwidth of 1 Mbps.

### SUMMARY OF INVENTION

It is an object of the invention to improve a C2 system such as a C41STAR system, particularly to improve the transport of data within such a system.

This object is achieved by the subject matter of the independent claims. Further embodiments are shown by the dependent claims.

A basic idea underlying the present invention is the integration of a network management system with a C2 system such as a C41STAR system so that dynamic reassignment of network resources based on real-time requirements from the C2 system can be provided, thus, allowing a better accommodation of data transmission in the C2 system to real-time needs of customers, for example to dynamically alter bandwidth assignment of satcom or other network resources based on the real-time needs of commanders.

An embodiment of the invention relates to a command and control system integrated with a network management system being adapted to manage resource assignments to assets controlled by the command and control system within a network.

The network management system may be integrated with the command and control system at an application layer and may handle a resource request for assigning resources within the network to assets received with a priority command from a command and control system.

The network management system may be adapted to dynamically respond to a priority command and to enable a service related to the priority command, particularly to enable a bandwidth reallocation within the network for assets.

The network management system may be further adapted to validate a resource request received with a priority command against constraints of the network.

The network management system may be also adapted to send a result message to the command and control management system signaling success or failure of a resource request received with a priority command.

In the system, an interface between the network management system and the command and control management system may be implemented as a direct interface or via a manager of managers system, which provides a common interface with individual management systems and a single hub for authorization and routing of requests from the individual management systems.

The manager of managers system may be adapted to maintain a dynamic directory of managed assets and to perform a lookup in the directory upon receipt of a resource request contained in a priority command received from a command and control system.

The manager of managers system may be further adapted to route a resource request contained in a priority command received from a command and control system according to additional supplied data within the priority command.

The network management system may be implemented as a service provider for a command and control system.

The network management system may particularly be based on a Service Oriented Architecture, particularly implemented using SOAP and HTTP.

Furthermore, the network management system may comprise a Web Services interface.

The command and control system may comprise one or more C41STAR systems.

The assets may comprise unmanned aerial vehicles, land vehicles, and/or video phones, and deliver data streams, particularly video and/or audio streams over the network to the command and control system.

These and other aspects of the invention will be apparent from and elucidated with reference to the embodiments described hereinafter.

The invention will be described in more detail hereinafter with reference to exemplary embodiments. However, the invention is not limited to these exemplary embodiments.

### BRIEF DESCRIPTION OF DRAWINGS

- Fig. 1: shows a diagram illustrating the concept of an embodiment of a command and control system according to the invention;
- Fig. 2: shows an exemplary application of the command and control system according to the invention for requesting a high bit rate video stream from a UAV;
- Fig.3: shows two embodiments of interfaces between a command and control system and a network management system according to the invention;
- Fig. 4: shows an embodiment of a manager of managers system as interface between several command and control systems and network management systems according to the invention;
- Fig. 5: shows a synchronous Web Services interface as embodiment of an interface between a command and control system and a network management system according to the invention;
- Fig. 6: shows an asynchronous Web Services interface as embodiment of an interface between a command and control system and a network management system according to the invention; and
- Fig. 7: shows manager of managers system as embodiment of an interface between two command and control systems and two network management systems according to the invention.

### DESCRIPTION OF EMBODIMENTS

In the following, embodiments of the invention are explained by means of the concept for an integrated C41STAR and network management solution that provides dynamic reassignment of network resources based on real-time requirements from a C41STAR system. It should be noted that the invention is not constrained to only C41STAR, although only C41STAR will be used as an example of such. The embodiments of the invention extend the capabilities of a C41STAR system by including communications control allowing a customer to dynamically alter the bandwidth assignment of satcom (or other network) resources based on the real-time needs of the commanders.

The concept underlying the embodiments of invention can be divided into two:
- Primarily, integration of a C41STAR management system and a NMS at the application layer to allow the C41STAR to prioritize how they want the bandwidth allocated to assets within an autonomous network.
- Secondarily, the ability of the NMS to dynamically respond to a priority request and enable the service. Service means particularly a dynamical alteration of the bandwidth assignment in a network in response to service requests.

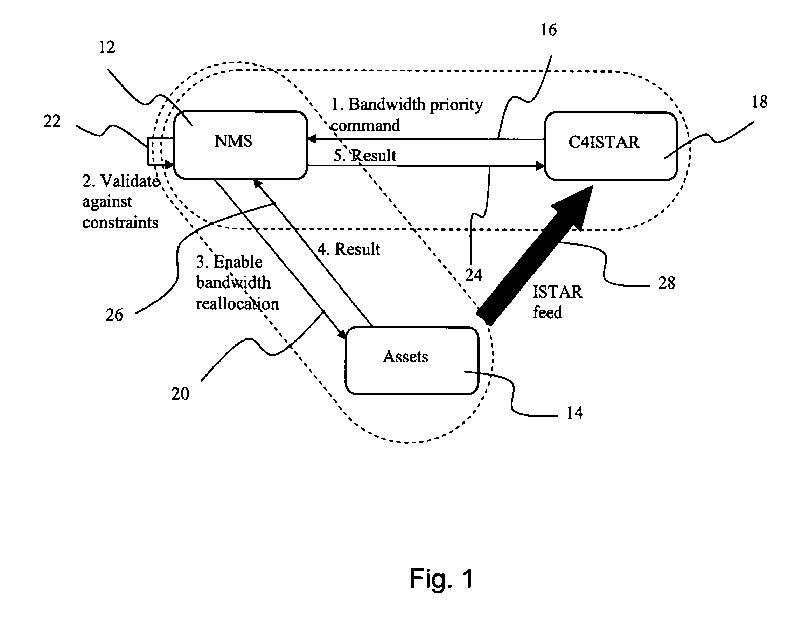

The diagram of Fig. 1 illustrates these two concepts, together with the chronological process for requesting and enabling the service. Fig. 1 shows a C2 system integrated with a NMS. A C41STAR system 18 of the system controls assets 14 such as UAVs, which transmit ISTAR feeds 28 to the C41STAR system 18 of a SATCOM network. The C41STAR system 18 can transmit a resource request 16 for assigning more bandwidth to a certain asset (in step 1, a bandwidth priority request is transmitted from the C4ISTAR system 18 to the NMS 12). The NMS 12 validates the requested bandwidth against constraints in step 2 (reference numeral 22 in Fig. 1). If step 2 fails steps 3 and 4 will be missed and a failure result with result message 24 will be sent to the C41STAR system 18. If step 2 succeeds, a command for enabling a bandwidth reallocation 20 is transmitted from the NMS 12 to the assets 14 in step 3. The assets 14 respond with a result message 26 to the NMS 12 informing whether the bandwidth reallocation was successful or failed in step 4. The result from step 4 will be returned with a message in step 5 i.e. success or failure, optionally with additional information such as a configured data rate, from the NMS 12 to the C41STAR system 18. If the bandwidth reallocation as requested by the C4lSTAR system 18 succeeded, the assets 14 will change the data rate according to the request, which influences the ISTAR feeds 28 from the assets 14 to the C4ISTAR system 18

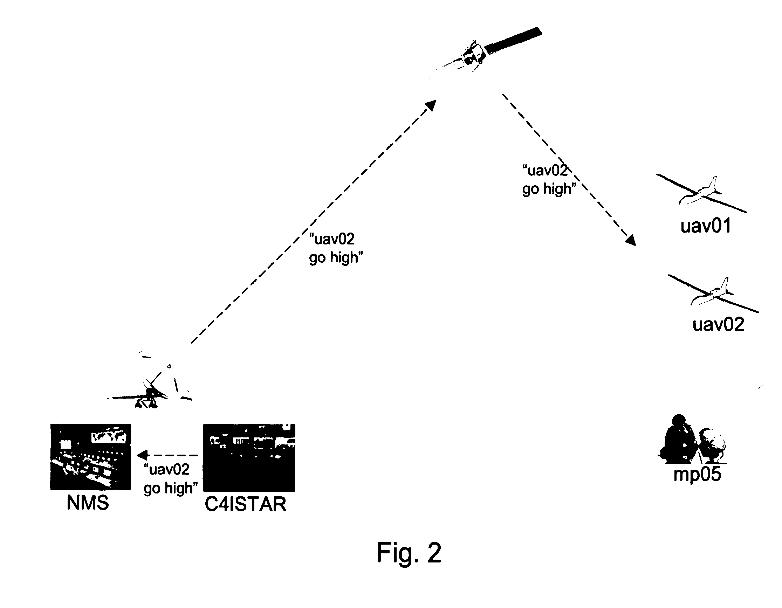

The scenario as shown in Fig. 2 and described in the following illustrates the process performed by the system shown in Fig. 1 and outlined above:
Satcom resources have been planned up and configured for an entire network of deployed assets including a group of for example 12 assets in a single deployment performing ISR (Intelligence, Surveillance, and Reconnaissance) sharing between them 12 Mbps bandwidth. Each asset is streaming a live video feed back to a command station of a C41STAR system. The assets as shown in Fig. 2 may be for example UAVs uav01, uav02 and satellite video phones mp05. Normally, the assets equally share the available bandwidth for video streaming.

The C41STAR system may provide a map based interface with real-time feeds of the 12 asset positions including the ability to view each video feed by selecting an asset from the map. Because the assets are sharing a limited bandwidth they can only stream low to medium quality video (normal definition) using roughly 1 Mbps.

A commander using the C41STAR system wishes to see more detail from a feed from one of the assets receiving higher quality video from that asset as quickly as possible.

This would require a change in the satcom configuration to allow that asset to stream high definition video and use for example 6 Mbps of the bandwidth whilst the remaining 11 assets would need to share the remaining 6 Mbps so each dropping down from 1 Mbps to roughly 512 Kbps. Because of the real-time nature of the scenario the changes on the satcom configuration would need to be done dynamically and immediately.

The instruction is given from the C41STAR system to increase the required bandwidth for the asset to allow higher quality video. This could be enabled through a "single-click" function within the C41STAR software using GUI (Graphical User Interface) controls, for example by clicking on a "HD streaming video" button on the position of uav02.

This triggers an electronic message to the NMS, for example "uav02 go high" to apply the necessary reconfiguration (step 1 in Fig. 1). The message would consist of (as a minimum) the unique ID of the asset and the specific instruction e.g.
<assetlD>uav02</assetlD><dataRate>max</dataRate>

The NMS processes the request (step 2 in Fig. 1) and reconfigures the elements of the network deployment over the air immediately (step 3 in Fig. 1) and the video feed can increase to high definition from the asset.

The command station can now receive HD streaming video from that asset and if there is no spare capacity receives a lower quality video from the other assets in the deployment group.

The GUI reflects the switch to HD and current data rate is updated accordingly. If the request was unsuccessful an appropriate message would be returned from the NMS and the GUI would indicate this to the operator (steps 4 and 5 in Fig. 1).

When the higher rate feed is no longer required the configuration could be returned to it's original planned state by commanding normal video in the same manner.

Primarily, any modification to the configuration of the network should be constrained to an element of an autonomous network such as described in the above scenario. It should not require any modification to the satellite payload, nor impact on the rest of the network outside each deployment group. Any reconfiguration should be limited to those assets in the autonomous network.

Alternatively, if the bandwidth requirements are greater than the maximum that is available to the deployment and re-planning of the wider network exercise is allowed then the request could trigger a re-planning exercise of the network.

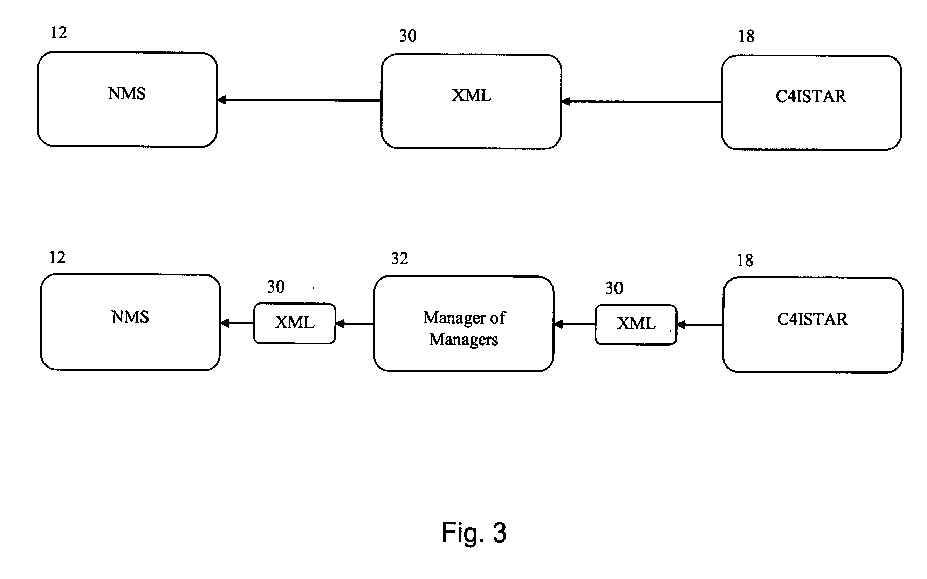

The interface between C4ISTAR 18 and NMS systems 12 can be realized both directly or via a Manager of Managers as shown in Fig. 3 depending on requirements. The direct electronic interface 30 would be completely automated. The interface via a Manager of Managers system 32 could have various degrees of automation depending on how much the interfaces are electronic, require operator interaction, or involve manual processes, and this would affect the responsiveness. If the C41STAR system 18 needs only to interface with one NMS 12 then a direct interface 30 would be sufficient. If the C41STAR system 18 uses resources managed by multiple NMSs 12 an interface to a Manager of Managers system 32 would mean that the C4ISTAR system 18 would not need to know which NMS 12 it needs to talk to since the Manager of Managers system 32 would manage that.

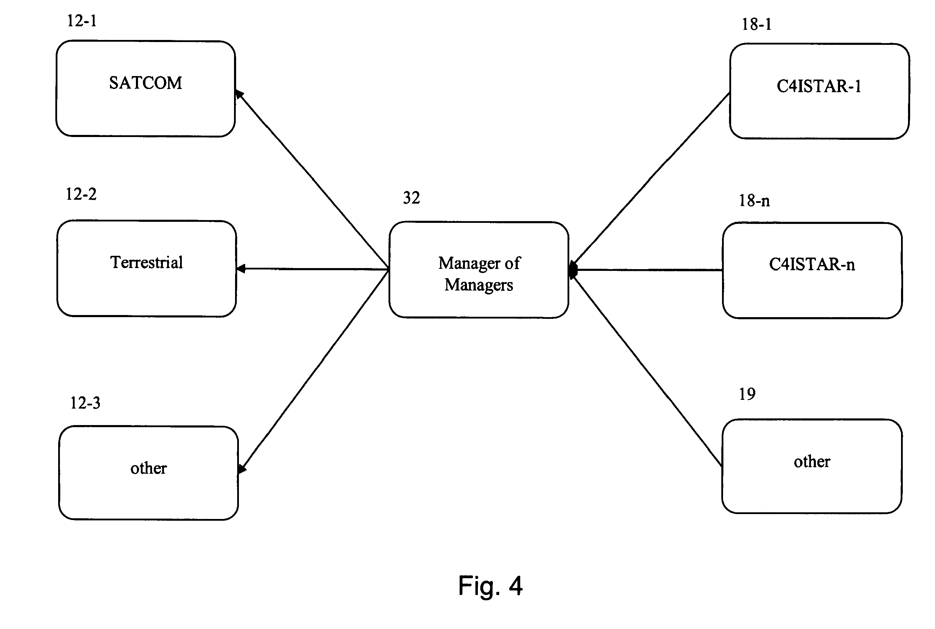

Using a Manager of Manager approach any combination as shown in Fig. 4 could be implemented: the Manager of Managers system 32 could control the access from several C2 systems such as several C4ISTAR-1 to C4ISTAR-n systems 18-1 to 18-n or other C2 systems 19 to different networks such as a satcom network 12-1, a terrestrial network 12-2 or other networks 12-3.

A Manager of Managers system could provide a common interface with individual management systems, and a single hub for authorisation and routing of requests.

There are a number of technical mechanisms to allow applications to talk to each other, particularly based around open standards. As this is effectively a service offered by an NMS, to a C41STAR system, (and potentially other systems), an appropriate architecture to use would be a Service Oriented Architecture (SOA) implemented using SOAP over HTTP (Web Services).

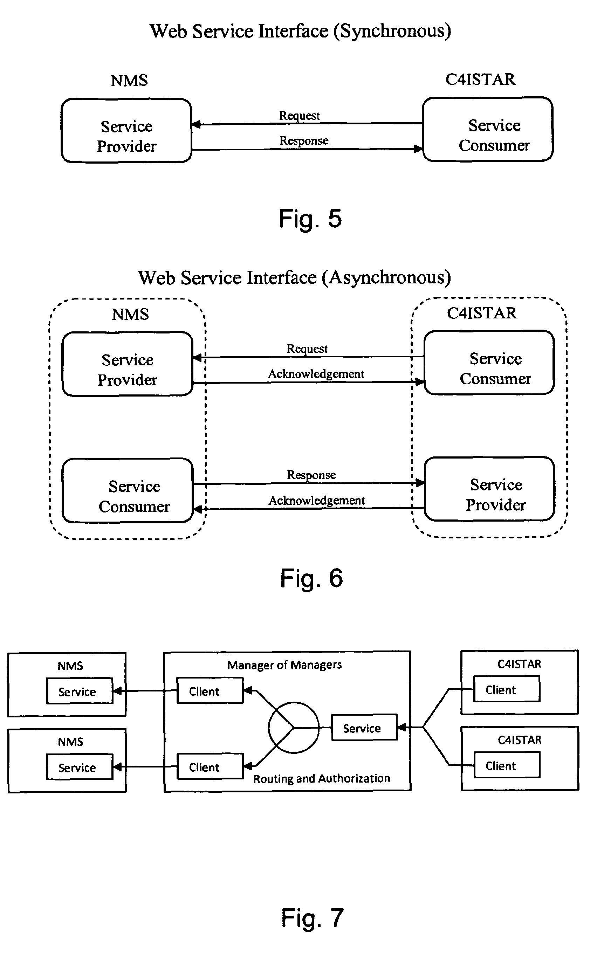

In this architecture an NMS would be an instance of a service provider and a C4ISTAR system would be an instance of a service consumer, as shown in Fig. 5. An example request could be "For this asset give me higher bandwidth" and the response could be "Request successful - asset given 6Mbps". The interface definition for the request and response can be typically defined in an XML schema that is provided by the Service Provider and adhered to by the Service Consumer.

Depending on the amount of time required for the Service Provider to respond to the request the interaction between the two entities may need to be a pair of asynchronous requests/responses as shown in Fig. 6. In this case the consumer of the first request receives an acknowledgement that the request has been received, validated, and is being processed rather than the result. The C4ISTAR system would need to provide a service for the NMS to send a response to asynchronously when it has completed processing the request. The NMS sends a response and it then receives an acknowledgement that the C4ISTAR system has received and validated the response.

The Service Oriented Architecture approach would work particularly well where there are multiple dispersed C41STAR systems that require the same service and/or where a C4ISTAR system requires services from multiple NMS. In the Manager of Managers solution this would use the architecture, as shown in Fig. 7.

If some assets are always managed by a particular NMS the Manager of Managers could route the service requests by maintaining a dynamic directory of managed assets and performing a lookup in that directory. If some assets are managed by multiple NMS e.g. UAVs transiting between LOS (Line Of Sight) and BLOS (Beyond Line Of Sight) then the Manager of Managers could route according to additional supplied data within the control message e.g.
<assetID>uav02</assetID><dataRate>max</dataRate><source>BLOS</sour ce>
or from another source. Finally, dynamic resource allocation in a NMS according to the invention is briefly discussed:
Within the NMS the dynamic resource allocation can be achieved in a number of ways, including the use of a DAMA (Demand Assigned Multiple Access) controller or ACM (Adaptive Coding and Modulation) using VBR (Variable Bit Rate) and CBR (Constant Bit Rate) to control the terminal bandwidth usage.

These would give priority use of the bandwidth to the priority terminal(s) and the remaining terminals in the group would share the remaining bandwidth between them.

There are two scenarios to consider: where there has been planned over-allocation of resources to provide spare capacity, and where the full capacity has been allocated and the terminals are sharing the full bandwidth available. In the first instance increasing the bandwidth for an individual terminal could easily not impact the other terminals. In the second instance the data rates for the other terminals would need to be dropped.

The core concept of the present invention is the integration of C41STAR and Network Management Systems to extend the control capabilities of C4ISTAR into dynamic communications control through electronic interfaces. Further aspects of the invention are the concept and precise mechanism for dynamic bandwidth reallocation (Satcom or generic), the concept using SOA as application layer design, the concept utilizing the Manager of Managers approach in system architecture, the concept delivered through a "single-click" operator interaction.

### REFERENCE NUMERALS AND ABBREVIATIONS

- 12: NMS
- 12-1: SATCOM NMS
- 12-2: terrestrial NMS
- 12-3: other NMS
- 14: assets
- 16: bandwidth priority command
- 18: C41STAR system
- 18-1: C41STAR system
- 18-n: C41STAR system
- 19: other C2 management system
- 20: enabling bandwidth reallocation command
- 22: validation of bandwidth reallocation against constraints
- 24: result message from NMS to C41STAR system
- 26: result message from assets to NMS
- 28: ISTAR feed from an asset to C41STAR system
- 30: direct XML interface
- 32: manager of managers system

- ACM: Adaptive Coding and Modulation
- C2: Command and Control
- C41STAR: Command, Control, Computers, Communications, (military) Intelligence, Surveillance, Target Acquisition, and Reconnaissance
- CBR: Constant Bit Rate
- DAMA: Demand Assigned Multiple Access
- GUI: Graphical User Interface
- HD: High Definition
- HTTP: Hyptertext Transfer Protocol
- ID: Identification
- NMS: Network Management System
- SATCOM: Satellite Communications
- SOA: Service Oriented Architecture
- SOAP: Simple Object Access Protocol
- UAV: unmanned aerial vehicle
- VBR: Variable Bit Rate

## Claims

1. A command and control system (18) integrated with a network management system (12) being adapted to manage resource assignments to assets (14) controlled by the command and control system within a network.

2. The system of claim 1, wherein the network management system (12) is integrated with the command and control system (18) at an application layer and handles a resource request for assigning resources within the network to assets (14) received with a priority command (16) from a command and control system (18).

3. The system of claim 2, wherein the network management system (12) is adapted to dynamically respond to a priority command (16) and to enable a service (20) related to the priority command, particularly to enable a bandwidth reallocation within the network for assets (14).

4. The system of claim 2 or 3, wherein the network management system (12) is adapted to validate (22) a resource request received with a priority command (16) against constraints of the network.

5. The system of claim 2, 3 or 4, wherein the network management system (12) is adapted to send a result message (24) to the command and control system (18) signaling success or failure of a resource request received with a priority command.

6. The system of claim 2, 3, 4 or 5, wherein an interface between the network management system (12; 12-1, 12-2, 12-3) and the command and control system (18; 18-1, 18-2, 19) is implemented as a direct interface (30) or via a manager of managers system (32), which provides a common interface with individual management systems (18-1, 18-2, 19) and a single hub for authorization and routing of requests from the individual management systems (18-1, 18-2, 19).

7. The system of claim 6, wherein the manager of managers system (32) is adapted to maintain a dynamic directory of managed assets (14) and to perform a lookup in the directory upon receipt of a resource request contained in a priority command received from a command and control system (18).

8. The system of claim 6 or 7, wherein the manager of managers system (32) is adapted to route a resource request contained in a priority command received from a command and control system (18) according to additional supplied data within the priority command.

9. The system of any of the preceding claims, wherein the network management system (12) is implemented as a service provider for a command and control system (18).

10. The system of claim 9, wherein the network management system (12) is based on a Service Oriented Architecture, particularly implemented using SOAP and HTTP.

11. The system of claim 10, wherein the network management system (12) comprises a Web Services interface.

12. The system of any of the preceding claims, wherein the command and control system comprises one or more C4ISTAR systems (18; 18-1, 18-2).

13. The system of any of the preceding claims, wherein the assets (18) comprise unmanned aerial vehicles, land vehicles, and/or video phones, and the assets deliver data streams, particularly video and/or audio streams over the network to the command and control system (18).
